Europäisches Patentamt

European Patent Office

Office européen des brevets

(19)

(11) Veröffentlichungsnummer : **0 025 188**
**B1**

(12) **EUROPÄISCHE PATENTSCHRIFT**

(45) Veröffentlichungstag der Patentschrift :
26.01.83

(21) Anmeldenummer : **80105110.3**

(22) Anmeldetag : **28.08.80**

(51) Int. Cl.³ : **G 08 B 13/18**, G 02 B 13/08

(54) **Optische Anordnung für einen Strahlungsdetektor.**

(30) Priorität : **10.09.79 CH 8130/79**

(43) Veröffentlichungstag der Anmeldung :
**18.03.81 Patentblatt 81/11**

(45) Bekanntmachung des Hinweises auf die Patenterteilung : **26.01.83 Patentblatt 83/04**

(84) Benannte Vertragsstaaten :
**DE FR GB SE**

(56) Entgegenhaltungen :
**DE A 2 653 111**
**DE B 1 090 876**
**FR A 2 080 963**
**FR A 2 321 115**
**FR A 2 371 024**
**GB A 250 268**
**US A 3 829 693**

(73) Patentinhaber : **CERBERUS AG**
**Alte Landstrasse 411**
**CH-8708 Männedorf (CH)**

(72) Erfinder : **Keller, Hansjürg**
**Allenbergstrasse 59**
**CH-8708 Männedorf (CH)**
Erfinder : **Hanselmann, Benjamin**
**Postgasse 12**
**CH-8708 Männedorf (CH)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Optische Anordnung für einen Strahlungsdetektor

Die Erfindung betrifft eine optische Anordnung für einen Strahlungsdetektor mit wenigstens einem Strahlungsempfangsbereich, welchem eine optisch wirksame Fläche mit verschiedenen Hauptkrümmungsradien angeordnet ist, wobei die Brennweiten in den beiden Hauptkrümmungsebenen voneinander verschieden sind.

Solche Anordnungen dienen dazu, die Strahlung von einem mehr oder weniger ausgedehnten Objekt auf einen oder mehrere Strahlungsdetektoren zu konzentrieren. Bei der Strahlung kann es sich um elektromagnetische Strahlung im infraroten, sichtbaren oder ultravioletten Spektralbereich handeln, wobei die optische Anordnung bezüglich ihrer Transmissions- oder Reflexionseigenschaften an die Art der zu detektierenden Strahlung angepasst ist.

Bei dieser Strahlung kann es sich beispielsweise bei der Verwendung zum Einbruchschutz um die Eigenstrahlung einer Person im langwelligen Infrarot handeln (passive Infrarot-Einbruchdetektoren), um die an einer Person reflektierte Fremdstrahlung (aktive Einbruchdetektoren) oder bei der Verwendung zur Brandmeldung um die von einer Flamme ausgehende Strahlung (Flammenmelder).

Da der zu überwachende Bereich oder die nachzuweisenden Objekte, z.B. ein Einbrecher, in verschiedenen Richtungen eine relativ verschiedene Ausdehnung besitzen, hat sich als zweckmässig erwiesen, den Strahlungsdetektor mit einer optischen Anordnung zu versehen, welche wenigstens einen streifenförmigen Strahlungsempfangsbereich erzeugt, der in einer Richtung eine relativ geringe Ausdehnung oder einen kleinen Oeffnungswinkel aufweist, in der dazu senkrechten Richtung jedoch relativ ausgedehnt ist und einen grossen Oeffnungswinkel besitzt. Zum Nachweis eines sich in einem Bereich bewegenden Einbrechers werden beispielsweise Anordnungen benützt, welche mehrere parallele, voneinander getrennte, streifenförmige Strahlungsempfangsbereiche aufweisen (DE-OS 26 53 111), meist in vertikaler Orientierung. Ein Einbrecher, der ein in Vertikalrichtung langgestrecktes, infrarotstrahlendes Objekt darstellt, durchschreitet bei einer Bewegung mehrere Empfangsbereiche oder Empfangsbereichsgrenzen, so dass der Strahlungsdetektor eine Strahlung wechselnder Intensität aufnimmt, was in geeigneter Weise zur Alarmsignalgabe ausgewertet werden kann, wie beispielsweise im Schweizer-Patent Nr. 599 642 beschrieben.

Mit einer aus dem US-Patent 2 198 725 vorbekannten Anordnung werden Mehrere parallele, streifenförmige Empfangsbereiche mit Hilfe eines vor den Strahlungsdetektor gesetzten Gitterrasters erzeugt. Eine solche Anordnung hat jedoch den Nachteil einer geringen Empfindlichkeit und eines schlechten Wirkungsgrades, da nur ein kleiner Teil der von einem Objekt ausgehenden Strahlung den Strahlungsdetektor erreicht und keine, die Wirksamkeit erhöhende Konzentration mit optischen Mitteln vorgesehen ist. Da für den Strahlungsdetektor im Interesse einer möglichst guten Empfindlichkeit eine bestimmte strahlungsempfindliche Fläche vorgesehen sein muss, sind wegen deren Ausdehnung zudem die Grenzen der Strahlungsempfangsbereiche unscharf. In grösseren Entfernungen überschneiden sich daher die Empfangsbereiche und fliessen ineinander, so dass dort keine Bewegung eines Einbrechers mehr nachgewiesen werden kann.

Bei der aus dem US-Patent 4 058 726 vorbekannten Anordnung wird eine bessere Wirksamkeit und eine erhöhte Empfindlichkeit dadurch erreicht, dass für jeden der streifenförmigen Strahlungsempfangsbereiche eine optische Anordnung mit einem asphärischen Reflektor oder einer asphärischen Linse vorgesehen ist, die optisch wirksame Flächen mit verschiedenen Hauptkrümmungsradien in zwei zueinander senkrechten Richtungen aufweisen. Dabei ist der für alle Empfangsbereiche gemeinsame Strahlungsdetektor jeweils in einem Hauptbrennpunkt der einzelnen asphärischen Reflektoren oder Linsen angeordnet während der andere Hauptbrennpunkt an einer anderen Stelle liegt. Damit wird eine relativ gute optische Abbildung in einer Hauptkrümmungsebene der entsprechenden optischen Bauteile erreicht und somit in dieser Richtung eine relativ gute Begrenzung der einzelnen Strahlungsempfangsbereiche. Die Reichweite eines mit einer solchen optischen Anordnung ausgerüsteten Einbruchdetektors ist daher erheblich vergrössert, so dass bewegte Personen auch noch in grösserer Entfernung sicher nachgewiesen werden können. Nachteilig ist jedoch, dass in der anderen Richtung, beispielsweise in der vertikalen, wegen der fehlenden optischen Abbildung in dieser Richtung der Empfangsbereich nicht scharf begrenzt ist. Somit geht immer noch ein Teil der Strahlung verloren und die Empfindlichkeit ist noch nicht optimal.

In der DE-AS 1 090 876 wird eine optische Anordnung beschrieben, welche einen Strahlungsempfangsbereich aufweist, welchem eine erste optisch wirksame Fläche mit verschiedenen Hauptkrümmungsradien zugeordnet ist, wobei die Brennweiten in den beiden Hauptkrümmungsebenen voneinander verschieden sind, und welchem eine zweite optisch wirksame Fläche mit verschiedenen Hauptkrümmungsradien in den gleichen zueinander senkrechten Hauptkrümmungsebenen zugeordnet ist, wobei die Brennweiten der optischen Anordnung in den beiden Hauptkrümmungsebenen verschieden sind, jedoch die Brennlinien wenigstens angenähert an einem Ort zusammenfallen, so dass eine anamorphotische Abbildung stattfindet. Dadurch wird erreicht, dass bei einem auf die optische Anordnung auftreffenden parallelen Strahlenbündel der Querschnitt in einer Richtung geändert wird, ohne dass am Ausgang die Divergenz des Strahlenbündels geändert wird. Bei einem Strahlungsdetektor zum Nachweis von Objekten in einem zu überwachenden Bereich ist eine solche, für die Breitschirmkinematographie bestimmte optische Anordnung jedoch nicht geeignet, da die von den Objekten ausgehende Strahlung hierbei auf einen Detektor abgebildet werden muss, d.h. ein ursprünglich angenähert paralleles Strahlenbündel muss in einem Punkt abgebildet werden. Zudem müssen zum Nachweis von objekten mehrere Zonen gebildet werden, wobei das eine Abbildungselement allen Zonen gemeinsam ist.

Die Erfindung stellt sich die Aufgabe, die erwähnten Nachteile vorbekannter Anordnungen zu beseitigen und speziell eine optische Anordnung für einen Strahlungsdetektor zu schaffen, bei welchem die von einem Strahlungsempfangsbereich mit verschiedener Ausdehnung in zwei zueinander senkrechten Richtungen, insbesondere einem langgestreckten Strahlungsempfangsbereich, eintreffende Strahlung auf die strahlungsempfindliche Fläche des Strahlungsdetektors optimal konzentriert wird, um die Empfindlichkeit und Wirksamkeit weiter zu verbessern. Die Anordnung soll so beschaffen sein, dass möglichst die gesamte, aus einem Strahlungsempfangsbereich eintreffende Strahlung auf die strahlungsempfindliche Fläche des Strahlungsdetektors konzentriert wird. Eine Weiterbildung der erfindungsgemässen Anordnung soll es ermöglichen, die Strahlungsempfangsbereiche in allen Richtungen schärfer als bisher zu begrenzen, so dass die wirksame Reichweite, insbesondere bei Verwendung als Einbruchdetektor, vergrössert wird.

Erfindungsgemäss wird diese Aufgabe dadurch gelöst, dass die optische Anordnung gemäss Oberbegriff des Anspruchs 1 so ausgebildet ist, dass jedem der Strahlungsempfangsbereiche eine zweite optisch wirksame Fläche mit verschiedenen Hauptkrümmungsradien in den gleichen zueinander senkrechten Hauptkrümmungsebenen zugeordnet ist, wobei die Brennweiten der optischen Anordnung in den beiden Hauptkrümmungsebenen verschieden sind, jedoch die Brennpunkte in den beiden Hauptkrümmungsebenen zugleich wenigstens angenähert am Ort des Strahlungsdetektors zusammenfallen, so dass in den beiden Hauptkrümmungsebenen eine anamorphotische Abbildung stattfindet.

Da die Hauptbrennweiten in den beiden Hauptkrümmungsebenen verschieden sind, lassen sich diese zwei oder mehr Bauteile insbesondere so zusammensetzen, dass in den beiden zueinander senkrechten Ebenen eine verschiedene Anzahl von Zwischenabbildungen entfernter Objekte entstehen, wobei jedoch die letzte Abbildung hinter dem letzten optischen Bauteil in beiden Richtungen zusammenfällt. Dort erfolgt eine scharfe Abbildung und deshalb wird an dieser Stelle der Strahlungsdetektor angebracht. Da die wirksamen Gesamtbrennweiten des gesamten Systems jedoch in den beiden zueinander senkrechten Ebenen verschieden sind, so ist auch die Vergrösserung in diesen beiden Ebenen unterschiedlich. Das bedeutet, dass bei geeigneter Wahl der entsprechenden Parameter, beispielsweise ein langgestreckter, rechteckiger Strahlungsempfangsbereich auf eine quadratische Fläche anamorphotisch abgebildet werden kann oder eine langgestreckte Ellipse auf eine kreisförmige, strahlungsempfindliche Fläche des Strahlungsdetektors.

Eine besonders einfache Anordnung dieser Art lässt sich jedoch auch ohne Zwischenabbildung mit zwei gekreuzten Zylinderlinsen erreichen, wobei in einer Ebene von der einen Linse ein Objekt durch die andere Linse hindurch auf den Detektor abgebildet wird, während in der dazu senkrechten Ebene eine direkte Abbildung durch die zweitgenannte Linse erfolgt.

Die Erfindung wird anhand der in den Figuren dargestellten Ausführungsbeispiele beschrieben.

Figur 1 zeigt ein Beispiel mit zwei asphärischen Linsen.

Figur 2 zeigt ein weiteres Ausführungsbeispiel mit zwei Reflektoren und gefalteter optischer Achse.

Figur 3 zeigt ein Ausführungsbeispiel mit asphärischen Linsen und zwei getrennten Strahlungsempfangsbereichen.

Figur 4 zeigt einen Einbruchdetektor unter Verwendung einer Anordnung gemäss Figur 3.

Figur 5 zeigt ein Ausführungsbeispiel mit Reflektoren und drei getrennten Strahlungsempfangsbereichen.

Figur 6 zeigt ein modifiziertes Beispiel nach Figur 1.

Figur 7 zeigt einen Strahlengang in einer Anordnung nach Figur 1.

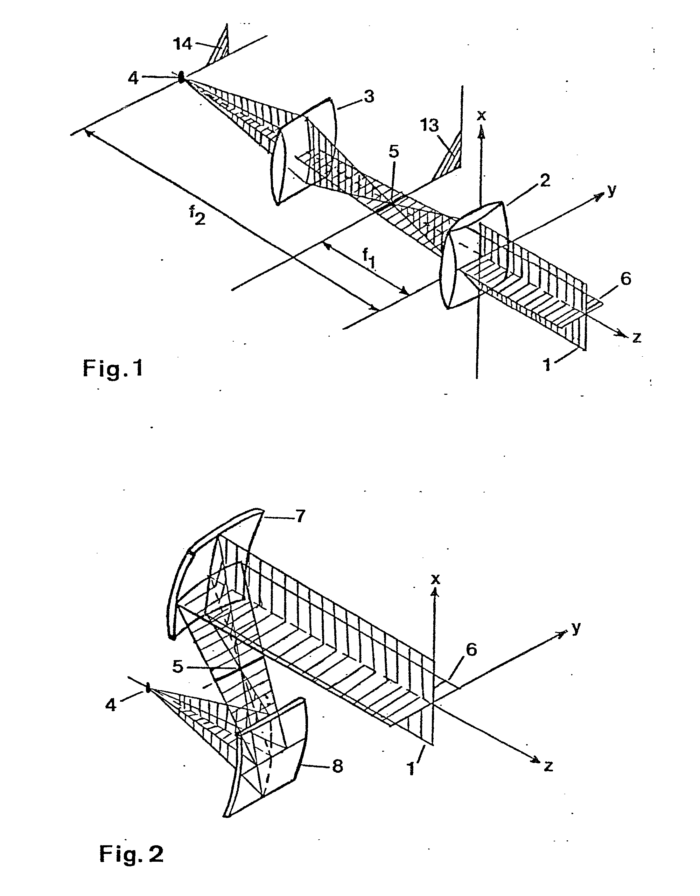

Bei der in Figur 1 dargestellten Anordnung ist objektseitig in der optischen Achse Z eine Linse 2 vorgesehen, bei der mindestens eine Oberfläche so ausgebildet ist, dass in einer durch die Achse X und die optische Achse Z gehenden Ebene und in einer dazu senkrechten durch die Achse Y und Z gelegten Ebene unterschiedliche Krümmungsradien auftreten. Eine solche Oberfläche kann beispielsweise als Ausschnitt der oberfläche eines Torus oder eines elliptischen Paraboloids ausgebildet sein. Entsprechend ist die Brechkraft dieser Linse in den beiden zueinander senkrechten Ebenen 1 und 6 verschieden, im vorliegenden Fall in der die Achse X enthaltenden Ebene 1 stärker als in der anderen Achse. Ein von einem weit entfernten Objekt ausgehendes Strahlenbündel wird in dem beiden Ebenen 1 und 6 daher in verschiedenen Brennpunkten fokussiert, und zwar in Ebene 1 im Punkt 5 mit einer Brennweite $f_1$ und in Ebene 6 in einem weiter entfernten Brennpunkt 4 mit einer Brennweite $f_2$. Zwischen den beiden Brennpunkten 4 und 5 ist eine weitere asphärische Linse 3 vorgesehen, welche als zylindrische oder prismatische Linse ausgebildet ist, wobei der Krümmungsradius in der YZ-Ebene unendlich ist. Durch diese weitere Linse 3 wird also das Strahlenbündel in der Ebene 6 nicht beeinflusst und bleibt auf den Brennpunkt 4 fokussiert. dagegen wird das andere Strahlenbündel in der Ebene 1 nochmals fokussiert. Die Hauptbrennweite der Linse 3 in der Ebene 1 ist nun so gewählt, dass die das Zwischenbild 5 enthaltende Ebene 13 auf die das Bild 4 enthaltende Ebene 14 abgebildet wird. Damit wird erreicht, dass die Bilder in beiden Ebenen im gleichen Punkt 4 zusammenfallen, wo der Strahlungsdetektor angebracht ist. Die beschriebene Anordnung wirkt also gewissermassen in der YZ-Ebene als Teleobjektiv und in der XZ-Ebene als Weitwinkelobjektiv. Sie liefert ein bei ideal ausgebildeten Linsen scharfes, jedoch verzerrtes, d.h. in der Y-Richtung gedehntes Bild in der Bildebene 14.

Je nach der Natur der zu detektierenden Strahlung oder bedingt durch technologische Möglichkeiten kann es vorteilhaft sein, die Anordnung statt mit Linsen mit Reflektoren auszuführen. Insbesondere bei anzustrebender höherer Lichtstärke oder bei Ausnützung der langwelligen Infrarotstrahlung, wie bei Einbruchdetektoren, lassen sich Reflektoren besser in der benötigten Form und mit den notwendigen Eigenschaften herstellen.

Figur 2 zeigt eine solche Anordnung mit zwei asphärischen Reflektoren, wobei der Reflektor 7 der Linse 2 und der Reflektor 8 der Linse 3 entspricht. Die optische Achse Z ist in diesem Beispiel zu einer Zickzackform gefaltet und der Brennpunkt 4 liegt knapp unterhalb des Reflektors 7. Auf diese Weise lässt sich eine sehr lichtstarke Anordnung mit besonders kurzer Baulänge realisieren.

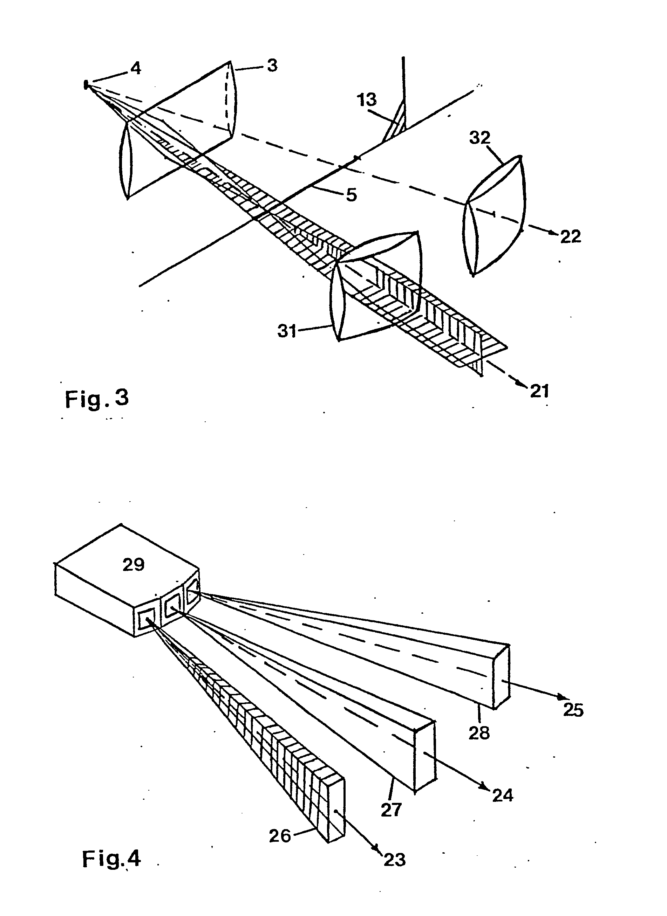

Eine Anordnung mit mehreren Sichtfeldern ist in Figur 3 dargestellt. Die Abbildung der aus den Richtungen 21 und 22 eintreffenden Strahlungsbündel erfolgt analog zu Figur 1, wobei für jede dieser Richtungen je eine asphärische Linse 31 und 32 vorgesehen ist, welche in der vertikalen Richtung jeweils ein Zwischenbild in der Zwischenbildebene 13 erzeugen. Die einzelnen Zwischenbilder werden durch eine gemeinsame Linse 3 auf den Brennpunkt 4 fokussiert, an welchem sich der Strahlungsdetektor befindet. Gleichzeitig werden die horizontalen Strahlenbündel ohne wesentliche Beeinflussung durch die gemeinsame Linse 3 ebenfalls auf diesen Punkt 4 fokussiert. Es sei bemerkt, dass statt einer gemeinsamen Linse auch für jeden Empfangsbereich eine separate Linse verwendet werden kann, wobei die Zwischenbilder 5 dann nicht mehr in der gleichen Zwischenbildebene 13 liegen müssen.

Figur 4 zeigt einen Einbruchdetektor, in welchem eine Anordnung nach Figur 3 verwendet wird. Dabei sind an der Frontseite eines Gehäuses 29 die für die Empfangsbereiche 26, 27, 28 bzw. die Empfangsrichtungen 23, 24, 25 bestimmten, getrennten Linsen angeordnet, während im Gehäuseinneren die gemeinsame Linse 3, der Strahlungsdetektor 4, sowie eine zugehörige Ausschalteschaltung, beispielsweise nach Schweizer-

Patent 599 642 angeordnet sind. Eine solche Anordnung weist also scharf begrenzte, längliche Strahlungsempfangsbereiche auf, welche durch Dunkelfelder getrennt sind. Durch geeignete Wahl der Krümmungsradien der Linsen kann erreicht werden, dass die Höhen- und Breitenausdehnung dieser Empfangsfelder etwa den Abmessungen eines Menschen angepasst sind. Mit einer solchen Anordnung lässt sich dann ein Einbrecher in einem überwachten Gebiet in besonders wirksamer und empfindlicher Weise nachweisen. Infolge der scharfen Begrenzung der Empfangsbereiche auch in grosser Distanz ist ein sicherer Nachweis von Personen auch noch in grösseren Entfernungen ohne wesentlichen Empfindlichkeitsverlust möglich.

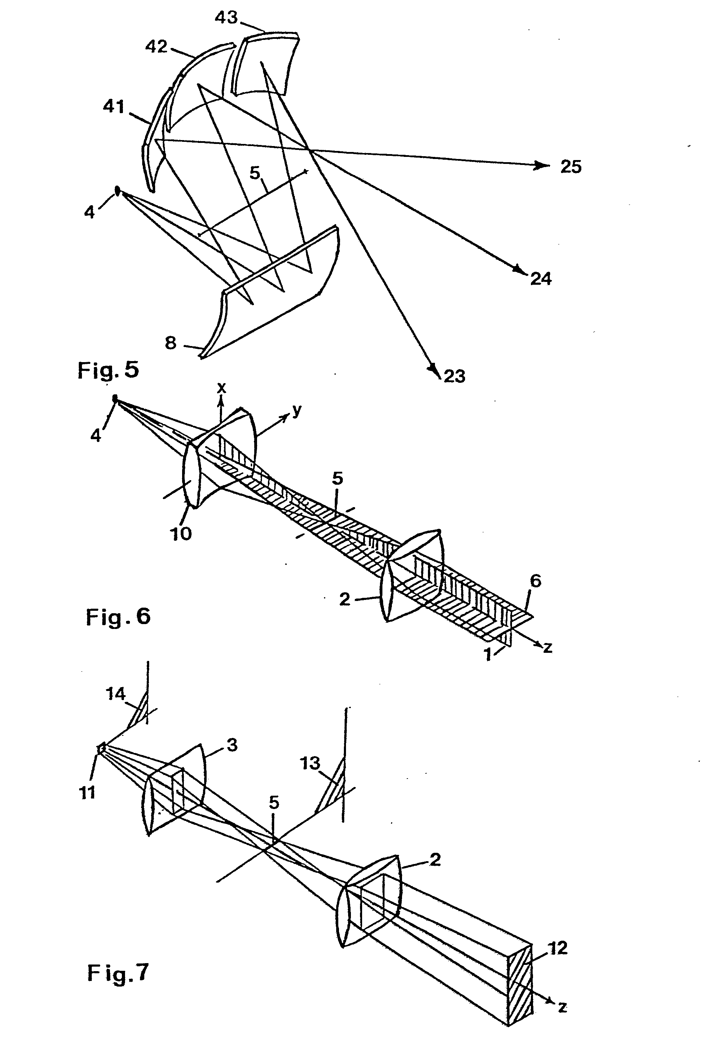

Figur 5 zeigt eine zu Figur 3 analoge Anordnung, bei der wiederum anstelle von Linsen Reflektoren 41, 42, 43 verwendet sind. Jedem dieser Reflektoren entspricht eine Empfangsrichtung 23, 24, 25. Statt einer gemeinsamen Linse ist ein gemeinsamer Reflektor 8 vorgesehen, welcher die Strahlung auf einen Strahlungsdetektor 4 fokussiert. Auch hier ergibt sich im Vergleich zu einer Linsenanordnung wegen des gefalteten, zickzackförmigen Strahlenganges wiederum eine besonders kurze Baulänge, wie sie bei der praktischen Verwendung häufig sehr erwünscht ist.

Die bei den bisher beschriebenen Ausführungsbeispielen verwendete Linse 3 muss nicht notwendigerweise zylindrisch oder prismatisch ausgeführt sein. Wie in Figur 6 gezeigt, kann stattdessen auch eine sattelförmige Linse 10 vorgesehen sein, wobei die Krümmung in der YZ-Ebene dazu benützt werden kann, eine Abbildungskorrektur für das Strahlungsbündel in der Ebene 6 zu bewirken. Wesentlich ist lediglich, dass in einer Ebene ein Zwischenbild entsteht, welches von der zweiten Linse abgebildet wird, während in der dazu senkrechten Ebene die Abbildung durch beide Linsen auf den gleichen Punkt ohne Zwischenbild erfolgt.

Es ist auch möglich, weitere asphärische Linsen im Strahlengang anzuordnen, wobei die gesamte Anordnung stets so gestaltet werden muss, dass für ein Strahlenbündel in einer Hauptebene die Anzahl der Zwischenbilder verschieden ist von der Anzahl für das Strahlenbündel in der dazu senkrechten Hauptebene. Eine der beiden Zahlen kann dabei Null sein. In der Regel sind alle Linsen mit verschiedenen Hauptkrümmungsradien in den beiden zueinander senkrechten Ebenen versehen. Es können jedoch auch rotationssymmetrische, z.B. sphärische Linsen zusätzlich zur Verbesserung der Abbildungsqualität in den Strahlengang gebracht werden.

Figur 7 zeigt einen Strahlenverlauf, wie er in der Praxis beispielsweise bei Einbruchdetektoren zu erwarten ist. Die optische Anordnung entspricht dabei der in Figur 1 dargestellten. Das als rechteckig angenommene Strahlung aussendende Objekt mit wesentlich grösserer Höhe als Breite, z.B. ein Mensch wird durch die erste Linse 2 in die Zwischenbildebene 13 in Form einer Brennlinie 5 abgebildet. Diese Brennlinie wird darauf durch die zweite Linse 3 in ein Bild 11 abgebildet, welches bei entsprechender Ausbildung der beiden Linsen nahezu quadratisch ist. Das langgestreckte Objekt 12 erzeugt also ein quadratisches Bild 11, da die üblichen Strahlungsdetektorelemente meist eine ähnliche Ausdehnung in allen Richtungen haben, z.B. kreisförmig oder quadratisch, so lässt sich mit der beschriebenen Anordnung eine optimale Konzentration der Strahlung eines Objektes bestimmter Form, insbesondere von langgestreckten Objekten auf ein solches übliches Detektorelement erreichen. Durch geeignete Wahl der Parameter kann dabei die Verzerrung in den beiden Hauptrichtungen den Bedürfnissen der Praxis angepasst werden. So kann die beschriebene Anordnung auch umgekehrt dazu benützt werden, die Strahlung aus einem quadratischen oder kreisförmigen Empfangsbereich auf ein längliches oder rechteckförmiges Detektorelement zu konzentrieren.

Es sei noch bemerkt, dass sich eine sogenannte anamorphotische Abbildung auch ohne jegliche Zwischenabbildung realisieren lässt, indem beispielsweise in der Anordnung nach Figur 1 auch die Linse 2 als Zylinderlinse ausgebildet ist, während die Zylinderachse der Zylinderlinse 3 senkrecht dazu liegt und in y-Richtung weist. der Abstand der beiden gekreuzten Zylinderlinsen ist so gewählt, dass sich deren Brennlinien etwa am Ort des Strahlungsdetektors 4 schneiden. Auch auf diese Weise kann eine scharfe Abbildung mit unterschiedlicher Vergrösserung in zwei zueinander senkrechten Ebenen erreicht werden.

## Ansprüche

1. Optische Anordnung für einen Strahlungsdetektor (4) mit wenigstens einem Strahlungsempfangsbereich, welchem eine erste optisch wirksame Fläche (3 ; 8 ; 10) mit verschiedenen Hauptkrümmungsradien zugeordnet ist, wobei die Brennweiten in den beiden Hauptkrümmungsebenen (1, 6) voneinander verschieden sind, dadurch gekennzeichnet, dass jedem der Strahlungsempfangsbereiche (26, 27, 28) eine zweite optisch wirksame Fläche (2 ; 7 ; 31/32 ; 41/42/43) mit verschiedenen Hauptkrümmungsradien in den gleichen zueinander senkrechten Hauptkrümmungsebenen (1, 6) zugeordnet ist, wobei die Brennweiten ($f_1$, $f_2$) der optischen Anordnung in den beiden Hauptkrümmungsebenen (1, 6) verschieden sind, jedoch die Brennpunkte in den beiden Hauptkrümmungsebenen (1, 6) zugleich wenigstens angenähert am Ort des Strahlungsdetektors (4) zusammenfallen, so dass in den beiden Hauptkrümmungsebenen eine anamorphotische Abbildung stattfindet.

2. Anordnung nach Anspruch 1, dadurch gekennzeichnet, dass die optisch wirksamen Flächen asphärische Linsen (2, 3 ; 31/32, 3 ; 2, 10) mit verschiedenen Brennweiten in den beiden Hauptkrümmungsebenen (1, 6) sind.

3. Anordnung nach Anspruch 1, dadurch gekennzeichnet, dass die optisch wirksamen Flächen asphärische Reflektoren (7, 8 ; 41/42/43, 8) mit verschiedener Brennweite in den beiden Hauptkrümmungsebenen (1, 6) sind.

4. Anordnung nach Anspruch 1, dadurch gekennzeichnet, dass die zwei optisch wirksamen Flächen gekreuzte Zylinderlinsen sind, deren Brennlinien sich wenigstens angenähert am Ort des Strahlungsdetektors (4) schneiden.

5. Anordnung nach einem der Ansprüche 1 bis 3, dadurch gekennzeichnet, dass für ein weit entferntes Objekt in den beiden hauptkrümmungsebenen (1, 6) eine verschiedene Anzahl von Zwischenabbildungen vorgesehen ist, nämlich im Falle nur zweier optisch wirksamer Flächen keine Zwischenabbildung in der einen Hauptkrümmungsebene (6) und eine Zwischenabbildung (5) in der dazu senkrechten anderen Hauptkrümmungsebene (1).

6. Anordnung nach Anspruch 3, dadurch gekennzeichnet, dass die optische Achse (Z) der Anordnung zickzackförmig gefaltet ist.

7. Anordnung nach Ansprüche 2 und 5, dadurch gekennzeichnet, dass objektseitig eine konvexe asphärische Linse (2) vorgesehen ist und detektorseitig wahlweise eine Zylinderlinse (3) oder eine Toruslinse (10), wobei ein Hauptbrennpunkt (5) der konvexen asphärischen Linse (2) vor der Zylinder- oder Toruslinse liegt und der andere Hauptbrennpunkt (4) hinter dieser.

8. Anordnung nach einem der Ansprüche 1 bis 6, dadurch gekennzeichnet, dass zur Erzeugung mehrerer Strahlungsempfangsbereiche (26, 27, 28) ein für alle Empfangsbereiche gemeinsames optisches Bauteil (3 ; 8) vorgesehen ist und je ein weiteres optisch wirksames Bauteil (31, 32 ; 41, 42, 43) für jeden der Strahlungsempfangsbereiche.

9. Verwendung der Anordnung nach einem der Ansprüche 1 bis 7 zum Einbruchschutz, dadurch gekennzeichnet, dass die von einer Person in einem Strahlungsempfangsbereich ausgehende Strahlung detektiert wird.

10. Verwendung nach Anspruch 9, dadurch gekennzeichnet, dass an den Strahlungsdetektor (4) eine Auswerteschaltung angeschlossen wird, die ein Signal abgibt, wenn sich die empfangene Strahlung in vorbestimmter Weise ändert.

11. Verwendung nach Anspruch 9, dadurch gekennzeichnet, dass die optisch wirksamen Flächen (31/32, 3 ; 41/42/43, 8) so angeordnet und ausgebildet sind, dass mehrere getrennte, streifenförmige Strahlungsempfangsbereiche (26, 27, 28) entstehen.

## Claims

1. An optical arrangement for a radiation detector (4) containing at least one radiation receiving region with which there is operatively correlated a first optically effective surface (3 ; 8 ; 10) containing different primary radii of curvature planes (1, 6) differ from one another, characterized by the features that, each of the radiation receiving regions (26, 27, 28) has operatively associated therewith a second optically effective surface (2 ; 7 ; 31/32 ; 41/42/43) containing different primary radii of curvature in the same mutually perpendicular primary curvature planes (1, 6), wherein the focal lengths ($f_1$, $f_2$) of the optical arrangement are different in both primary curvature planes (1, 6), however the focal points in both primary curvature planes (1, 6) simultaneously coinciding at least approximately at the site of the radiation detector (4), so that in both primary radiation planes there occurs anamorphotic imaging.

2. The arrangement according to claim 1, characterized by the features that the optically effective surfaces are aspherical lenses (2, 3 ; 31/32, 3 ; 2, 10) with different focal lengths in both primary curvature planes (1, 6).

3. The arrangement according to claim 1, characterized by the features that the optically effective surfaces are aspherical reflectors (7, 8 ; 41/42/43, 8) having different focal lengths in both primary curvature planes (1, 6).

4. The arrangement according to claim 1, characterized by the features that, the two optically effective surfaces comprise crossed cylinder lenses, the focal lines of which at least approximately intersect at the site of the radiation detector (4).

5. The arrangement according to claims 1 to 3, characterized by the features that for a far distant object there are provided in both primary curvature planes (1, 6) a different number of intermediate imagings, namely in the case of only two optically effective surfaces no intermediate imaging in the one primary curvature plane (6) and an intermediate imaging (5) in the other primary curvature plane (1) perpendicular thereto.

6. The arrangement according to claim 3, characterized by the features that the optical axis (Z) of the arrangement is folded in a zig-zag shaped configuration.

7. The arrangement according to claims 2 and 5, characterized by the features that at the side of the object there is provided a convex aspherical lens (2) and at the side of the detector randomly a cylinder lens (3) or a torous lens (10), wherein one primary focal point (5) of the convex aspherical lens (2) is located forwardly of the cylinder or torous lens and the other primary focal point (4) after the same.

8. The arrangement according to one of the claims 1 to 6, characterized by the features that for producing a plurality of radiation receiving regions (26, 27, 28) there is provided an optical component (3 ; 8) which is common for all receiving regions and a respective further optically effective component (31, 32 ; 41, 42, 43) for each of the radiation receiving regions.

9. The use of the arrangement according to one of the claims 1 to 7 for intrusion detection purposes, characterized by the features that there is detected the radiation emerging from a person in a radiation receiving region.

10. The use according to claim 9, characterized by the features that there is connected with the radiation detector (4) an evaluation circuit which delivers a signal when the received radiation changes in a predetermined manner.

11. The use according to claim 9, characterized by the features that the optically effective surfaces (31/32, 3 ; 41/42/43, 8) are arranged and constructed such that there are formed a number of separate, strip-shaped radiation receiving regions (26, 27, 28).

## Revendications

1. Dispositif optique pour un détecteur de rayonnement (4) comportant au moins une place de réception du rayonnement, à laquelle est associée une surface (3 ; 8 ; 10) active du point de vue optique, et possédant des rayons de courbure principaux différents, les distances focales dans les deux plans de courbure principaux (1, 6) étant différents l'un de l'autre, caractérisé en ce qu'à chacune des plages de réception du rayonnement (26, 27, 28) est associée une seconde surface (2 ; 7 ; 31/32 ; 41/42/43) active du point de vue optique et possédant des rayons de courbure principaux différents dans les mêmes plans principaux de courbure (1, 6) perpendiculairement entre eux, les distances focales ($f_1$, $f_2$) du dispositif optique dans les deux plans de courbure principaux (1, 6) étant différents alors que les foyers dans les deux plans de courbure principaux (1, 6) coïncident simultanément au moins approximativement à l'emplacement du détecteur de rayonnement (4), en sorte qu'il se produit dans les deux plans de courbure principaux une formation de l'image anamorphosée.

2. Dispositif selon la revendication 1, caractérisé en ce que les surfaces actives du point de vue optique sont des lentilles asphériques (2, 3 ; 31/32, 3 ; 2, 10) possédant des distances focales différentes dans les deux plans de courbures principaux (1, 6).

3. Dispositif selon la revendication 1, caractérisé en ce que les surfaces actives du point de vue optique sont des réflecteurs asphériques (3, 8 ; 41/42/43, 8) possédant des distances focales différentes dans les deux plans de courbure principaux (1, 6).

4. Dispositif selon la revendication 1, caractérisé en ce que les deux surfaces actives du point de vue optique sont des lentilles cylindriques croisées, dont les axes focaux s'intersectent au moins approximativement à l'emplacement du détecteur de rayonnement (4).

5. Dispositif selon l'une des revendications 1 à 3, caractérisé en ce que pour un objet très éloigné il est prévu dans les deux plans de courbure principaux (1, 6) un nombre différent d'images intermédiaires, à savoir dans le cas de seulement deux surfaces actives du point de vue optique, aucune image intermédiaire dans un plan de courbure principal (6) et une image intermédiaire (5) dans l'autre plan de courbure principal (1) perpendiculaire au précédent.

6. Dispositif selon la revendication 3, caractérisé en ce que l'axe optique (Z) du dispositif est brisé en forme de zig-zag.

7. Dispositif selon les revendications 2 et 5, caractérisé en ce que, du côté objet, il est prévu une lentille asphérique convexe (2) et que du côté détecteur il est prévu au choix une lentille cylindrique (3) ou une lentille torique (10), un foyer principal (5) de la lentille asphérique convexe (2) étant situé en avant de la lentille cylindrique ou de la lentille torique tandis que l'autre foyer principal (4) est situé derrière cette lentille.

8. Dispositif selon l'une des revendications 1 à 6, caractérisé en ce que pour produire plusieurs plages de réception de rayonnement (26, 27, 28) il est prévu un composant optique (3 ; 8) commun à toutes les zones de réception et un autre composant actif du point de vue optique (31, 32 ; 41, 42, 43) pour chacune des plages de réception du rayonnement.

9. Mise en œuvre du dispositif selon l'une des revendications 1 à 7 pour la protection contre les effractions, caractérisée en ce que le rayonnement émanant d'une personne dans une plage de réception des rayonnements est détecté.

10. Mise en œuvre selon la revendication 9, caractérisée en ce qu'au détecteur de rayonnement (4) est raccordé un circuit d'évaluation qui délivre un signal lorsque le rayonnement reçu varie d'une manière prédéterminée.

11. Mise en œuvre selon la revendication 9, caractérisée en ce que les surfaces actives du point de vue optique (31/32, 3 ; 41/42/43, 8) sont disposées et conçues de manière que soient formées plusieurs plages séparées de réception de rayonnement en forme de bandes (26, 27, 28).

Fig.1

Fig. 2

1

Fig. 3

Fig.4

Fig. 5

Fig. 6

Fig. 7

3